Europäisches Patentamt

European Patent Office

Office européen des brevets

(11) Veröffentlichungsnummer: **0 391 247**

**A2**

(12) **EUROPÄISCHE PATENTANMELDUNG**

(21) Anmeldenummer: **90105976.6**

(22) Anmeldetag: **29.03.90**

(51) Int. Cl.5: **B65G 47/26, B65G 17/24**

(30) Priorität: **06.04.89 DE 3911056**
**13.10.89 DE 3934233**

(43) Veröffentlichungstag der Anmeldung:
**10.10.90 Patentblatt 90/41**

(84) Benannte Vertragsstaaten:
**BE DE ES FR IT SE**

(71) Anmelder: **Dürr GmbH**
**Spitalwaldstrasse 18**
**D-7000 Stuttgart 40(DE)**

(72) Erfinder: **Schlauch, Peter**
**Kirchstr. 40**
**7101 Ellhofen(DE)**
Erfinder: **Weeber, Heinrich**
**Auf der Steige 7**
**7144 Asperg(DE)**

(74) Vertreter: **Hoeger, Stellrecht & Partner**
**Uhlandstrasse 14 c**
**D-7000 Stuttgart 1(DE)**

(54) **Gurtförderer.**

(57) Um einen Gurtförderer, insbesondere Staurollen-gurtförderer, mit einem Fördergut, der eine sich in Gurtlängsrichtung erstreckende unelastische Verstärkungseinlage aufweist und längs welchem auf einer Gurtseite mit dem Fördergurt verbundene Rollenträger angeordnet sind, die der Verbindung mit dem Fördergurt dienende Bolzen aufweisen, derart zu verbessern, daß er den rauhen Betriebsbedingungen besser gewachsen, wird vorgeschlagen, daß die Bol-zen der Verstärkungseinlage benachbart in den Fördergurt eingreifen und mit dieser im wesentlichen unelastisch verbunden sind.

FIG.1

EP 0 391 247 A2

## Gurtförderer

Die Erfindung betrifft einen Gurtförderer, insbesondere einen Staurollengurtförderer, mit einem Fördergurt, der eine sich in Gurtlängsrichtung erstreckende unelastische Verstärkungseinlage aufweist und längs welchem auf einer Gurtseite mit dem Fördergurt versehene Rollenträger angeordnet sind, die der Verbindung mit dem Fördergurt dienende Bolzen aufweisen.

Insbesondere betrifft die Erfindung einen Staurollengurtförderer, wie er aus der EP-O 277 258-A1 bekannt geworden ist, so daß auf die Offenbarung dieser Druckschrift in vollem Umfang Bezug genommen wird.

Aus der vorgenannten europäischen Patentanmeldung ist ein Staurollengurtförderer bekannt, welcher einen Fördergurt aufweist, längs welchem auf einer Gurtseite an den Fördergurt gummielastische Lageraugen anvulkanisiert sind, an deren jedem mittels eines Querbolzens ein Rollenträger angelenkt ist, welcher vom zugeordneten Lerauge ge schleppt wird und in Förderrichtung hinter dem letzteren eine Rollenachse trägt, die zu beiden Seiten des Rollenträgers jeweils eine Tragrolle und dazwischen, nämlich im Rollenträger, diesen also überragend eine Staurolle hält. Für die Tragrollen können beiderseits des Fördergurts angeordnete und die Tragrollen abstützende Schienen vorgesehen sein, so daß die Staurollen nicht auf dem Fördergurt aufliegen und an der Unterseite des stillstehenden, weil gestauten Förderguts abrollen können, wenn der Fördergurt unter dem stehenden Förderbut durchläuft.

Der Erfindung liegt die Aufgabe zugrunde, einen Gurtförderer der gattungsgemäßen Art derart zu verbessern, daß er den rauhen Betriebsbedingungen besser gewachsen ist als der vorstehend beschriebene bekannte Gurtförderer. Diese Aufgabe wird bei einem Gurtförderer der eingangs beschriebenen Art erfindungsgemäß dadurch gelöst, daß die Bolzen der Verstärkungseinlage benachbart in den Fördergurt eingreifen und mit dieser im wesentlichen unelastisch verbunden sind.

Bei einem erfindungsgemäßen Gurtförderer erfolgt daher die Krafteinleitung im wesentlichen in die Verstärkungseinlage des Fördergurts, über die der größte Teil der Zugkräfte übertragen wird. Bei dem neuen z.B. für PKW-Karosserien üblichen Skid-Transport wird nun oft für die einen Skid-Kufen ein Gurtförderer eingesetzt, während die anderen Skid-Kufen auf einer Rollenbahn entlang laufen. Insbesondere einem solchen Verwendungszweck ist der erfindungsgemäße Gurtförderer besser gewachsen als der bekannte eingangs im Zusammenhang mit dem Stand der Technik beschriebene Gurtförderer, weil beim Vorschieben nur der einen Skid-Kufen mit Hilfe eines erfindungsgemäßen Gurtförderers dessen Rollenträger viel weniger zu einem seitlichen Ausschwenken neigen wie die durch die aufvulkanisierten Lageraugen geschleppten Rollenträger des als Stand der Technik beschriebenen bekannten Gurtförderers.

Bei der erfindungsgemäßen Lösung sind die unterschiedlichsten konstruktiven Lösungsmöglichkeiten denkbar. Als besonders vorteilhaft hat sich eine konstruktive Lösung herausgestellt, bei welcher der Rollenträger Seitenwangen aufweist, die Seitenflächen des Fördergurts übergreifen und an denen die Bolzen angreifen und bei welchen der Fördergurt der Verstärkungseinlage benachbart Ausnehmungen für den Eingriff der Bolzen aufweist, wobei die Ausnehmungen auf der dem Rollenträger zu- oder abgewandten Seite der Verstärkungseinlage, vorzugsweise auf der dem Rollenträger zugewandten Seite der Verstärkungseinlage angeordnet sind.

Die Bolzen könnten von den Seiten des Fördergurts her nur in diesem vorgesehene Sacklöcher eingreifen. Besonders bevorzugt werden jedoch Ausführungsformen, bei denen der Fördergurt unmittelbar über seiner Verstärkungseinlage Querkanäle aufweist, die von sich zwischen den Seitenwangen erstreckenden Bolzen durchgriffen sind, denn auf diese Weise ergibt sich eine noch bessere Ankopplung der Rollenträger an die die Zugkräfte im wesentlichen übertragende Verstärkungseinlage des Fördergurts.

Bei einem besonders bevorzugten Ausführungsbeispiel des Gurtförderers ist vorgesehen, daß der Rollenträger an beiden Seitenflächen des Fördergurts gegen eine Verschiebung quer zur Förderrichtung abgestützt ist. Hierdurch wird insbesondere auch vermieden, daß sich der Rollenträger um eine senkrecht auf einer Ebene des Fördergurts stehende Achse verdreht und somit ein Verkanten der Rollenträger gegenüber dem Fördergurt unterbunden wird.

Die Abstützung des Rollenträgers an den Seitenflächen des Fördergurts ist grundsätzlich auf unterschiedlichste Art und Weise möglich. So wäre es beispielsweise denkbar, daß der Rollenträger selbst Abstützflächen aufweist, die an den Seitenflächen des Fördergurts anliegen und lediglich Zugkräfte vom Fördergurt auf den Rollenträger über die Bolzen übertragen werden. Besonders vorteilhaft ist es jedoch, wenn die Abstützung des Rollenträgers durch die Bolzen erfolgt, die am Fördergurt quer zur Förderrichtung unverschieblich gehalten sind.

Eine derartige unverschiebliche Halterung der Bolzen kann auf die unterschiedlichste Art und Weise realisiert sein. Beispielsweise ist es möglich, die Bolzen quer zur Förderrichtung unverschieblich im Fördergurt zu verankern. Besonders vorteilhaft ist es jedoch, wenn die Bolzen mit an beiden Seiten des Fördergurts anliegenden Ringflanschen versehen sind und eine Abstützung der Bolzen über diese Ringflansche erfolgt.

Die Verbindung zwischen Rollenträger und Bolzen kann ebenfalls auf beliebige Weise realisiert sein. Beispielsweise ist es möglich, die Bolzen an ihren beiden, über den Fördergurt überstehenden Enden mit dem Rollenträger fest zu verbinden. Besonders zweckmäßig ist es jedoch, wenn die Bolzen mit einem über eine Seitenfläche des Fördergurts überstehenden Bereich in Richtung ihrer Achse unverschieblich mit dem Rollenträger verbunden sind. Bereits dadurch wird bei Verwendung zweier Bolzen erreicht, daß der Rollenträger sich nicht gegenüber dem Fördergurt verdrehen kann, da dar Rollenträger durch die Verankerung mit dem Bolzen über diese Bolzen an beiden Seiten des Fördergurts gegen eine seitliche Verschiebung quer zur Förderrichtung und somit auch gegen eine Verdrehung abgestützt ist.

Als besonders günstig hat es sich erwiesen, wenn die Bolzen mit einem über die andere Seitenfläche überstehenden Bereich in Richtung ihrer Achse verschieblich mit dem Rollenträger verbunden sind, da diese konstruktive Lösung die Möglichkeit bietet, Breitentoleranzen des Gurts in einfacher Weise auszugleichen.

Um den Fördergurt in beiden Längsrichtungen laufen lassen zu können, ohne daß die Gefahr eines Verkantens der Rollenträger gegenüber dem Fördergurt besteht, ist bei einer bevorzugten Ausführungsform vorgesehen, daß jeder Rollenträger, in Förderrichtung hintereinander, mit zwei Bolzen versehen ist. Damit der Fördergurt dann geschmeidig um Umlenkstellen herumlaufen kann, ist es empfehlenswert, mindenstens den bei normaler Förderrichtung vorne liegenden Bolzen in sich in Förderrichtung erstreckenden Langlöchern in den Seitenwangen des Rollenträgers zu halten.

Gerade wenn der Fördergurt in beiden Längsrichtungen antreibbar sein soll, ist es empfehlenswert, den Gurtförde rer so auszubilden, daß der Rollenträger ungefähr in der Mitte zwischen seinen beiden Bolzen eine Rollenachse trägt. Auf diese Weise wird die den Rollenträger beanspruchende Last auch gleichmäßig über die beiden Bolzen in den Fördergurt eingeleitet.

Der Stabilität der Rollenträger ist es schließlich förderlich, wenn diese, in der Draufsicht auf den Fördergurt, rahmen- oder kastenförmig ausgebildet sind.

Bei Längstraggurtförderern trat bislang immer das Problem auf, daß der Fördergurt zwischen den diesen nach unten abstützenden Tragrollen durch das den Fördergurt von oben belastende Fördergut nach unten gedrückt wurde, d.h. der Fördergurt wurde nicht nur auf Zug beansprucht, sondern auch einer Biegewechselbeanspruchung unterworfen. Deshalb hat sich der Erfinder die Aufgabe gestellt, die vom Fördergut hervorgerufene Biegebeanspruchung des Fördergurts zu verringern, weshalb erfindungsgemäß vorgeschlagen wird, bei einem Gurtförderer, insbesondere einem Längstraggurtförderer, das Fördergut über an den Rollenachsen vorgesehene Tragelemente zu tragen, um die Last unmittelbar über die Rollenachsen und die an diesen vorgesehenen Tragrollen in Schienen des Gurtförderers einzuleiten, auf denen die Tragrollen abrollen.

Nun ist aus der EP-O 277 258-A1 (Fig. 2b) ein Gurtförderer bekannt, welcher einen Fördergurt besitzt, längs dem auf einer Gurtseite mit dem Fördergurt verbundene Rollenträger vorgesehen sind, deren jeder mindestens eine Rollenachse besitzt, die zwischen zwei auf beiderseits des Fördergurts angeordneten Schienen abrollenden Tragrollen ein Tragelement - in diesem Fall in Form einer Staurolle - für das auf diesem aufliegende Fördergut trägt. Bei diesem bekannten Gurtförderer handelt es sich jedoch um einen Staurollenförderer.

Erfindungsgemäß wird nun ein Längstraggurtförderer mit einem Fördergurt, an welchem mit dem Fördergurt verbundene Rollenträger vorgesehen sind, deren jeder mindestens eine Rollenachse besitzt, die zwischen zwei auf beiderseits des Fördergurts angeordneten Schienen abrollenden Tragrollen ein Tragelement für das auf diesem aufliegende Fördergut trägt, so ausgebildet, daß der Rollenträger das Tragelement bildet. Der Rollenträger selbst tritt also an die Stelle der Staurolle des bekannten Gurtförderers.

Auch bei einem solchen erfindungsgemäßen Längstraggurtförderer empfiehlt es sich, die Rollenträger unmittelbar am Fördergurt anzubringen, insbesondere in der vorstehend für einen Staurollen-Gurtförderer erläuterten Weise.

Um den lasttragenden Rollenträger besonders stabil auszubilden, sieht eine bevorzugte Ausführungsform vor, daß der Rollenträger - in Förderrichtung gesehen - einen ungefähr umgekehrt U-förmigen Querschnitt besitzt. Soll der Gurtförderer für den Skid-Transport eingesetzt werden, ist es außerdem vorteilhaft, wenn der Rollenträger oben eine in Förderrichtung verlaufende Rinne zur Aufnahme einer Skid-Kufe bildet.

In allen diesen Fällen kann es sich empfehlen, zusätzliche Maßnahmen für eine Seitenführung des Fördergurts bzw. der Rollenträger zu ergreifen. Beim Stand der Technik nach der EP-O 277 258-A1 sind zu diesem Zweck an den Rollenhaltern separate Führungsklötze befestigt, die mit seitlichen Schienen zusammenwirken.

Viel einfacher läßt sich eine Seitenführung aber erfindungsgemäß dadurch erreichen, daß eine den Rollenträger durchsetzende Achse für wenigstens eine Trag- und/oder eine Staurolle an ihren Enden Seitenführungselemente, insbesondere aufgesetzte Kunststoffkappen, besitzt, für die der Gurtförderer zu beiden Seiten des Fördergurts sich in Förderrichtung erstreckende Leitelemente, insbesondere in Form von Schienen, aufweist.

Weitere Merkmale, Vorteile und Einzelheiten der Erfindung ergeben sich aus den beigefügten Ansprüchen und/oder aus der beigefügten Zeichnung oder der nachfolgenden Beschreibung der dargestellten bevorzugten Ausführungsformen der Erfindung. In der Zeichnung zeigen:

Fig. 1 einen Schnitt senkrecht zur Förderrichtung durch eine bevorzugte Ausführungsform eines erfindungsgemäßen Staurollen-Gurtförderers;

Fig. 2 eine Draufsicht auf diesen Staurollen-Gurtförderer;

Fig. 3 eine Seitenansicht dieses Gurtförderers, und

Fig. 4 bis 6 den Fig. 1 bis 3 entsprechende Darstellungen einer bevorzugten Ausführungsform eines erfindungsgemäßen Längstraggurtförderers für den Skid-Transport.

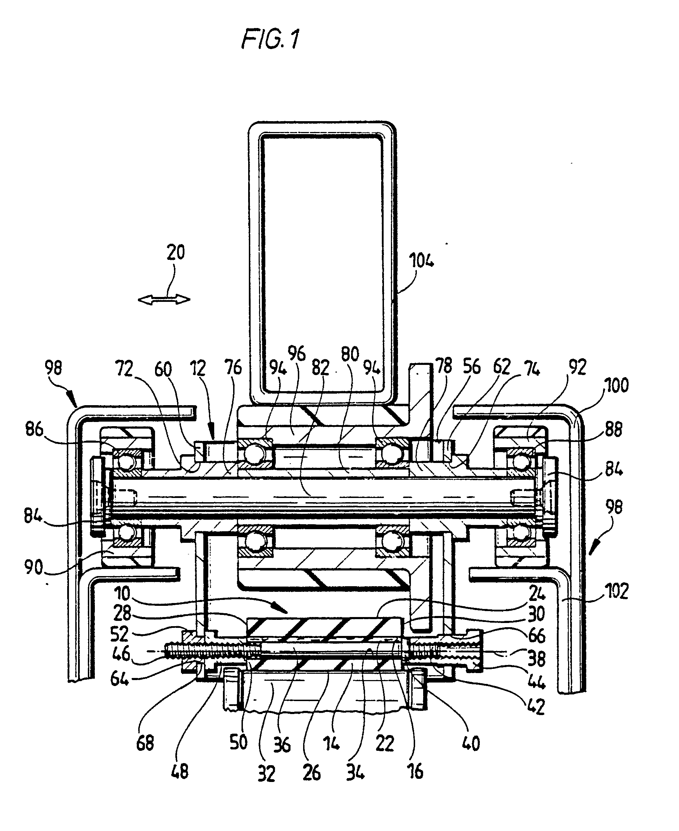

Ein in den Fig. 1 bis 3 dargestelltes erstes Ausführungsbeispiel eines Staurollen-Gurtförderers ist ausschnittsweise dargestellt im Bereich eines auf einem Fördergurt 10 gehaltenen Rollenträgers 12.

Der Fördergurt 10 hat, wie in Fig. 1 zu sehen, einen im wesentlichen rechteckförmigen Querschnitt und ist aus einem Körper 14 aus gummielastischem Material hergestellt. In diesem Körper 14 ist eine Verstärkungseinlage 16 vorgesehen, welche sich in Förderrichtung 18 längs des Fördergurts erstreckende Fasern aufweist, die in einer von der Förderrichtung 18 und der senkrecht auf der Förderrichtung 18 stehenden Querrichtung 20 aufgespannten Fläche 22 angeordnet sind, wobei die Fläche 22 ungefähr mittig zwischen einer Oberseite 24 und einer Unterseite 26 des Fördergurts 10 liegt. Vorzugsweise reicht die Verstärkungseinlage 16 in Querrichtung bis zu den Fördergurt 10 seitlich abschließenden Seitenflächen 28 und 30, welche sich zwischen der Oberseite 24 und der Unterseite 26 erstrecken, ungefähr senkrecht zur Querrichtung 20 stehen und den Fördergurt 10 seitlich begrenzen.

Im in Fig. 1 dargestellten Schnitt liegt der Fördergurt 10 im Bereich der Antriebs- und Spannstation mit seiner Unterseite 26 auf einem Stützrad 32 auf.

Durch den Fördergurt 10 hindurch erstrecken sich in der Querrichtung 20 von der einen Seitenfläche 28 zu der anderen Seitenfläche 30 reichende Querkanäle 34, welche im wesentlicnen dicht bei der Verstärkungseinlage 16 angeordnet sind und zwischen dieser und der Unterseite 26 den Körper 14 aus gummielastischem Material durchdringen.

Diese Querkanäle 34 sind von einem als Ganzes mit 36 bezeichneten Bolzen durchsetzt, an welchem der Rollenträger 12, wie nachfolgend im einzelnen beschrieben, fest gehalten ist.

Aufgrund der im wesentlichen dicht bei der Verstärkungseinlage 16 vorgesehenen Anordnung des Bolzens 36 in dem Querkanal 34 ist dieser im wesentlichen unelastisch mit der Verstärkungseinlage 16 durch den diesen umgebenden Körper 14 verbunden, da die Verstärkungseinlage 16 vorzugsweise aus in Förderrichtung 18 oder Gurtlängsrichtung verlaufenden Stahlseilen, Metallgewebebändern, Aramid- oder Kevlar-Fasereinlagen besteht und somit auch das diese Verstärkungseinlagen 16 umgebende gummielastische Material in unmittelbarer Umgebung der Verstärkungseinlage 16 unelastisch erscheinen läßt, so daß der Bolzen 36 im wesentlichen starr mit der Verstärkungseinlage 16 verbunden ist.

Der Bolzen 36 ist an dem Fördergurt 10 in Richtung seiner Längsachse 38 unverschieblich gehalten. Hierzu trägt der Bolzen 36 einen Ringflansch 40, welcher an diesen vorzugsweise einstückig angeformt ist und an der Seitenfläche 30 anliegt. Auf der dem Fördergurt 10 gegenüberliegenden Seite des Ringflansches ist der Bolzen 36 zusätzlich noch mit einem Gewindeabschnitt 42 versehen, auf welchen eine Hülse 44 bis zum Ringflansch 40 aufschraubbar ist.

An einem dem Gewindeabschnitt 42 gegenüberliegenden Ende ist der Bolzen 36 ebenfalls mit einem Gewindeabschnitt 46 versehen, auf welchen ebenfalls eine Hülse 48 aufschraubbar ist, welche einen Stützflansch 50 trägt, der an der Seitenfläche 28 zur Anlage bringbar ist. Durch Aufschrauben der Hülse 48 so weit, daß der Stützflansch 50 an der Seitenfläche 28 anliegt, kann der Bolzen 36 durch den Querkanal 34 auch so weit hindurchgezogen werden, daß der Ringflansch 40 an der Seitenfläche 30 zur Anlage kommt. Dadurch ist der Bolzen 36 in der Querrichtung 20 unverschieblich am Fördergurt gehalten. Zur Festlegung der auf den Gewindeabschnitt 46 aufschraubbaren Gewindehülse 48 ist ein zusätzliches Endstück 52 vorgesehen, welches ebenfalls auf den Gewindeabschnitt 46 aufschraubbar und mit der Hülse 48 in Form von zwei Gegenmuttern verspannbar ist.

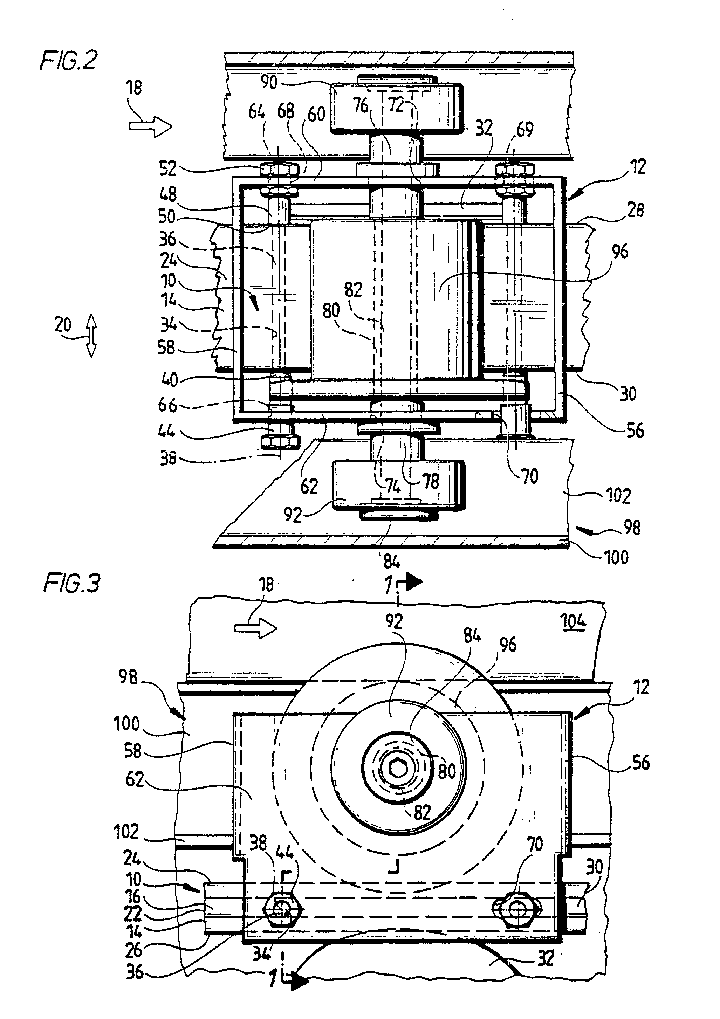

Wie in Fig. 2 und 3 zu erkennen, hat der Rollenträger 12 die Form eines kastenförmigen Rahmens mit einer Vorderwand 56, einer Rückwand 58 und zwei Seitenwangen 60 und 62, welche, wie in Fig. 3 dargestellt, die Seitenflächen 28 und 30 des Fördergurts 10 übergreifend nach unten gezogen sind und welche von den Bolzen 36 durchsetzt sind. Hierzu sind die Seitenwangen 60 und 62 mit Lagerdurchbrüchen 64 und 66 versehen, wobei der Lagerdurchbruch 64 in eine Nut 68 des Endstücks 52 eingreift, so daß die Seitenwangen 60 zwischen dem Endstück 52 und der Hülse 48 in Querrichtung 20 unverschieblich eingespannt sind.

Der Lagerdurchbruch 66 liegt auf einem Außenumfang der Hülse 44 passend an, so daß Bewegungen senkrecht zur Querrichtung 20 der Seitenwange 62 relativ zum Bolzen 36 nicht möglich sind.

Neben den Lagerdurchbrüchen 64 und 66 weisen die Seitenwangen 60 und 62 auch noch Lagerdurchbrüche 69 und 70 auf, welche den in Förderrichtung 18 vor dem hinteren Bolzen 36 liegenden vorderen Bolzen aufnehmen. Diese Lagerdurchbrüche 69 und 70 sind als Langloch ausgebildet und ermöglichen eine Bewegung des in diesem gehaltenen Bolzens 36 in Förderrichtung, jedoch nicht in Querrichtung 20 und senkrecht zur Querrichtung 20 und zur Förderrichtung 18.

Damit ist der Rollenträger 12 fest mit den Bolzen 36 an dem Fördergurt 10 fixiert.

Wie in Fig. 2 dargestellt, hat der Rollenträger 12 die Gestalt eines Rahmens, welcher zwei gegenüberliegende Lageröffnungen 72, 74 aufweist, in denen mittels Bundbüchsen 76 und 78 und einer Distanzbüchse 80 eine Achse 82 gehalten ist, auf deren Enden Kunststoffkappen 84 aufgesetzt sind.

Auf dieser Achse 82 sind mittels Lagern 86 und 88 Tragrollen 90 und 92 sowie mittels Lagern 94 eine Staurolle 96 drehbar gelagert, die erfindungsgemäß außen mit einer Bandage aus Vulkollan oder einem anderen Werkstoff versehen sind. Die beiden Tragrollen 90 und 92 liegen dabei außerhalb des Rollenträgers 12, die Staurolle 96 zwischen den Seitenwangen 60 und 62 des Rollenträgers 12, wobei die Staurolle 96 den Rollenträger 12 nach oben überragt.

Zu beiden Seiten des Fördergurts 10 besitzt der Gurtförderer jeweils eine Führungsbahnprofilschiene, die als Ganzes mit 98 bezeichnet ist. Sie besteht aus einer Führungsbahnseitenwange 100 und einer Führungsbahnlaufschiene 102, wobei auf letzterer die Tragrollen 90 und 92 abrollen und sich die Seitenführungselemente bildenden Kunststoffkappen 84 gegebenenfalls an den Führungsbahnseitenwangen 100 abstützen.

Auf der Staurolle sitzt nun beispielsweise ein Skid mit einer Skid-Kufe 104 auf.

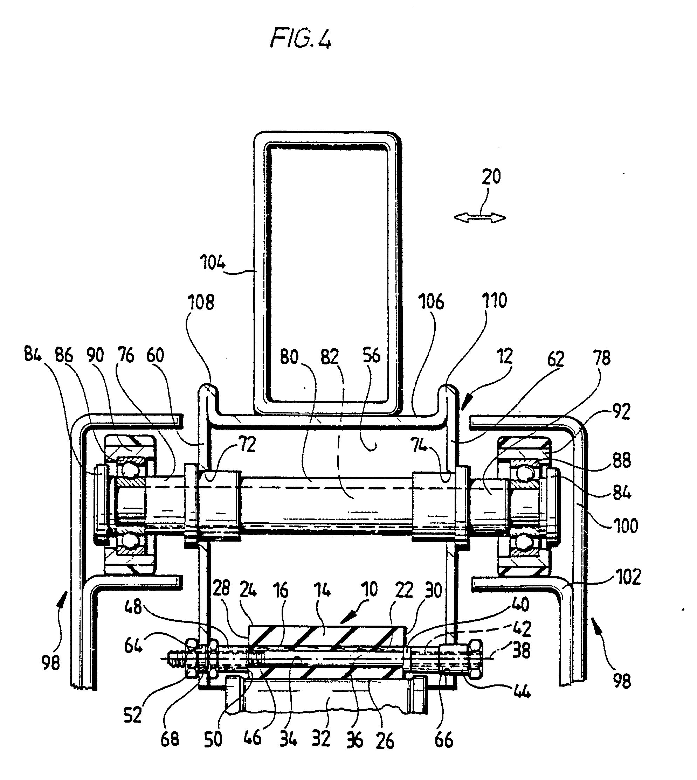

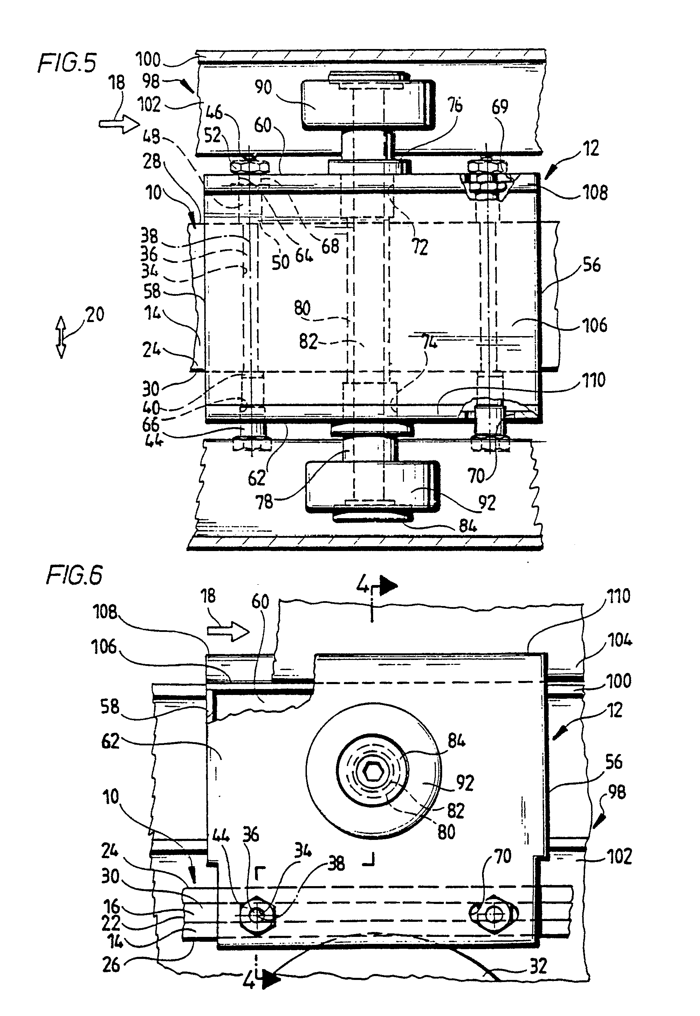

Bei einem zweiten Ausführungsbeispiel eines erfindungsgemäßen Gurtförderers, dargestellt in den Fig. 4 bis 6, sind die Teile insoweit als sie mit denen des ersten Ausführungsbeispiels identisch sind, mit denselben Bezugszeichen versehen, so daß hinsichtlich deren Beschreibung auf die Ausführungen zum ersten Ausführungsbeispiel verwiesen werden kann.

Bei dem zweiten Ausführungsbeispiel eines erfindungsgemäßen Gurtförderers handelt es sich um einen Längstrag gurtförderer, bei welchem im Gegensatz zum ersten Ausführungsbeispiel der kastenförmig ausgebildete Rollenträger 12 den eigentlichen Lastträger, in Fig. 4 den Träger 4 der Skid-Kufe 104, bildet. Zu diesem Zweck ist der Rollenträger 12 oben geschlossen und bildet eine Rinne 106, welche seitlich durch nach oben überstehende Bereiche 108 und 110 der Seitenwangen 60 und 62 begrenzt ist.

Damit können die Staurolle 96 und deren Lager entfallen, die Tragrollen 90 und 92 haben zusammen mit der als Ganzes mit 98 bezeichneten Führungsbahnprofilschiene jedoch dieselbe Funktion wie beim ersten Ausführungsbeispiel.

Dieses Ausführungsbeispiel stellt eine Vereinfachung des vorangegangenen Ausführungsbeispiels für all die Fälle dar, in welchen kein Stauen des Förderguts auf dem Gurtförderer erforderlich ist.

**Ansprüche**

1. Gurtförderer, insbesondere Staurollengurtförderer, mit einem Fördergurt, der eine sich in Gurtlängsrichtung erstreckende unelastische Verstärkungseinlage aufweist und längs welchem auf einer Gurtseite mit dem Fördergurt verbundene Rollenträger angeordnet sind, die der Verbindung mit dem Fördergurt dienende Bolzen aufweisen, **dadurch gekennzeichnet,** daß die Bolzen (36) der Verstärkungseinlage (16) benachbart in den Fördergurt (10) eingreifen und mit dieser im wesentlichen unelastisch verbunden sind.

2. Gurtförderer nach Anspruch 1, dadurch gekennzeichnet, daß der Rollenträger (12) Seitenwangen (60, 62) aufweist, die Seitenflächen (28, 30) des Fördergurts (10) übergreifen und an denen die Bolzen (36) angreifen und daß der Fördergurt (10) der Verstärkungseinlage (16) benachbart Ausnehmungen (34) für den Eingriff der Bolzen (36) aufweist.

3. Gurtförderer nach Anspruch 2, dadurch gekennzeichnet, daß der Fördergurt (10) unmittelbar bei seiner Verstärkungseinlage (16) liegend Querkanäle (34) aufweist, die von den die Seitenwangen (60, 62) miteinander verbindenden Bolzen (36) durchgriffen sind.

4. Gurtförderer nach einem der voranstehenden Ansprüche, dadurch gekennzeichnet, daß der Rollenträger (12) an beiden Seitenflächen (28, 30) des Fördergurts (10) gegen eine Verschiebung quer zur Förderrichtung (18) abgestützt ist.

5. Gurtförderer nach Anspruch 4, dadurch gekennzeichnet, daß die Abstützung des Rollenträgers (12) durch die Bolzen (36) erfolgt, die am Fördergurt (10) quer zur Förderrichtung (18) unverschieblich gehalten sind.

6. Gurtförderer nach Anspruch 5, dadurch gekennzeichnet, daß die Bolzen (36) mit an beiden Seitenflächen (28, 30) des Fördergurts (10) anliegenden Ringflanschen (40, 50) versehen sind.

7. Gurtförderer nach Anspruch 5 oder 6, dadurch gekennzeichnet, daß die Bolzen mit einem über eine Seitenfläche (28) des Fördergurts (10) überstehenden Bereich (46) in Richtung ihrer Achse (38) unverschieblich mit dem Rollenträger (12) verbunden sind.

8. Gurtförderer nach Anspruch 7, dadurch gekennzeichnet, daß die Bolzen (36) mit einem über die andere Seitenfläche (30) überstehenden Bereich (42) in Richtung ihrer Achse (38) verschieblich mit dem Rollenträger (12) verbunden sind.

9. Gurtförderer nach einem der voranstehenden Ansprüche, dadurch gekennzeichnet, daß jeder Rollenträger (12) in Förderrichtung (18) hintereinander zwei Bolzen (36) besitzt, von denen mindestens der in Förderrichtung vordere in sich in Förderrichtung (18) erstreckenden Langlöchern (68, 70) der Seitenwand (60, 62) gehalten ist.

10. Gurtförderer nach Anspruch 9, dadurch gekennzeichnet, daß der Rollenträger (12) ungefähr in der Mitte zwischen den beiden Bolzen (36) eine Rollenachse (82) trägt.

11. Gurtförderer nach einem der voranstehenden Ansprüche, dadurch gekennzeichnet, daß der Rollenträger (12) in der Draufsicht auf den Fördergurt (10) rahmen-oder kastenförmig ausgebildet ist.

12. Gurtförderer nach einem der voranstehenden Ansprüche, dadurch gekennzeichnet, daß eine den Rollenträger (12) durchsetzende Rollenachse (82) für wenigstens eine Tragrolle (90, 92) und eine Staurolle (96) an ihren Enden Seitenführungselemente (84) besitzt, für die der Gurtförderer zu beiden Seiten des Fördergurts (10) sich in Förderrichtung erstreckende Leitelemente (98) aufweist.

13. Gurtförderer mit einem Fördergurt, an welchem mit dem Fördergurt versehene Rollenträger vorgesehen sind, deren jeder mindestens eine Rollenachse besitzt, die zwischen zwei auf beiderseits des Fördergurts angeordneten Schienen abrollenden Tragrollen ein Tragelement für das auf diesem aufliegende Fördergut trägt, dadurch gekennzeichnet, daß der Rollenträger (12) das Tragelement (106) bildet.

14. Gurtförderer nach Anspruch 13, dadurch gekennzeichnet, daß der Rollenträger (12) unmittelbar am Fördergurt angebracht ist, insbesondere nach einem der Ansprüche 1 bis 12.

15. Gurtförderer nach Anspruch 13 oder 14, dadurch gekennzeichnet, daß der Rollenträger (12) - in Förderrichtung (18) gesehen - ein Tragelement (106) mit einem ungefähr U-förmigen Querschnitt besitzt.

16. Gurtförderer nach Anspruch 15, dadurch gekennzeichnet, daß der Rollenträger (12) für den Skid-Transport oben eine in Förderrichtung verlaufende Rinne (106) zur Aufnahme einer Skid-Kufe (104) bildet.

FIG. 1

FIG.2

FIG.3

FIG.4

FIG.5

FIG.6